# EUROPÄISCHE PATENTSCHRIFT

(11) **EP 3 739 399 B1**
(45) Veröffentlichungstag und Bekanntmachung des Hinweises auf die Patenterteilung: **27.09.2023**
(21) Anmeldenummer: 20174617.9
(22) Anmeldetag: 14.05.2020
(51) Int. Cl.: G05B 15/02

(54) **BEWEGLICHES BEDIENTERMINAL**
MOBILE OPERATOR TERMINAL
TERMINAL DE COMMANDE MOBILE

(30) Priorität: 17.05.2019 DE 102019113079
(43) Veröffentlichungstag der Anmeldung: 18.11.2020
(73) Patentinhaber: SIT Solution for IT-Payment GmbH, 20537 Hamburg (DE)
(72) Erfinder: BLOCK, Ralf, 21423 Winsen (Luhe) (DE)
(74) Vertreter: Michalski Hüttermann & Partner Patentanwälte mbB

(56) Entgegenhaltungen:
- EP-A1- 3 239 934
- CN-A- 104 778 758
- CN-A- 107 705 379
- DE-A1-102007 008 697

## Beschreibung

Die Erfindung betrifft Verfahren zum Ermitteln einer Bedienposition eines beweglichen Bedienterminals, zwecks Bedienung durch einen Fahrer in einem Fahrzeug.

Des Weiteren betrifft die Erfindung ein Verfahren zum Verschieben eines beweglichen Bedienterminals, zwecks Bedienung durch einen Fahrer in einem Fahrzeug.

Ferner betrifft die Erfindung eine Vorrichtung zur Durchführung der obigen Verfahren.

Die CN 107 705 379 A beschreibt Autobahnladeautomation und offenbart speziell eine barrierefreie Vorrichtung zum Aufnehmen von Karten zum Laden von Autobahnpassagen. Die barrierefreie Vorrichtung zum Aufnehmen von Straßenpassagen umfasst eine Standardvorrichtung zum Aufnehmen von Straßenkarten, eine mechanische Armstruktur mit sechs Freiheitsgraden und ein Bildidentifikationssystem, wobei das Bildidentifikationssystem durch einen fotoelektrischen Sensor, eine Kamera, gebildet wird und ein Bildverarbeitungssystem in der Kartenaufnahmemaschine. Die barrierefreie Vorrichtung zum Aufladen von Autobahnpassagen kann den Fahrzeugtyp und das Kennzeichen des aktuellen Fahrzeugs intelligent und schnell beurteilen, die dreidimensionale Koordinatenposition des Fahrzeugs in der aktuellen Umgebung entsprechend der Position des Fahrers und erhalten die voreingestellten Umgebungsparameter, und kann in ein Alarmsystem der örtlichen Organisation für öffentliche Sicherheit integriert werden und gleichzeitig die Position des Fahrers und das Gesicht identifizieren.

Die EP 3 239934 A1 beschreibt eine Parksäule, welche ein Modul umfasst, in das zumindest eine Komponente zur Bedienung der Parksäule und/oder zur Interaktion zwischen der Parksäule und einem Fahrzeuginsassen eines an der Parksäule stehenden Fahrzeugs integriert ist, welches bei Erkennung eines an der Parksäule stehenden Fahrzeugs um eine vorgegebene Strecke in Richtung des Fahrzeugs aus der Parksäule mittels eines Antriebsmittels reversibel herausfahrbar ist.

Die DE 10 2007008697 A1 beschreibt eine Vorrichtung zur Ausgabe oder Aufnahme von Tickets, z. B. an Ein- bzw. Ausfahrten von Parkhäusern, an Mautstellen oder dergleichen, mit einer Aus- bzw. Eingabeöffnung für die Tickets. Gemäß der Erfindung ist wenigsten ein die Aus- bzw. Eingabeöffnung umfassender Teil der Vorrichtung in Richtung quer zu einer an der Aus- bzw. Eingabeöffnung vorbeiführenden Fahrbahn verschiebbar.

Die CN 104 778 758 A beschreibt ein Kartenabrufsystem für eine Mautstation. Das Kartenabrufsystem für die Mautstation besteht aus einem Fahrzeuginduktor, einem Höhensensor, einer Kartenabrufvorrichtung, einem Stangenfallsystem und einer Steuerung, wobei die Steuerung mit der Fahrzeuginduktivität, dem Höhensensor und der Kartenabrufvorrichtung verbunden ist und das Stabfallsystem. Die Kartenabrufvorrichtung ist mit einer Kartenentladevorrichtung mit hoher Position und einer Kartenentladevorrichtung mit niedriger Position versehen, ein Autofahrer holt eine Karte an einer niedrigen Position und ein LKW-Fahrer und ein Pkw-Fahrer holen Karten an hohen Positionen gemäß der Fahrzeughöhen und Fahrer können bequem Karten abrufen.

Die DE 195 32 917 C1 beschreibt ein Bedienterminal für Betankungsanlagen, das über einen Schwenkarm horizontal verschwenkbar ist sowie durch eine vertikal angeordnete Linearführungen höhenverstellbar ist. Das Verstellen bzw. das Verschwenken des Bedienterminals wird manuell durch den Fahrer vorgenommen.

Den aus dem Stand der Technik bekannten Lösungen ist somit gemein, dass der Fahrer dafür sorgen muss, dass er sich und das Fahrzeug derart positioniert, dass eine Bedienung des Bedienterminals möglich ist.

Es besteht ein ständiges Bedürfnis ein Bedienterminal durch einen Fahrer eins Kraftfahrzeuges komfortabel bedienen zu können.

Es ist daher die Aufgabe der Erfindung, Maßnahmen aufzuzeigen, die eine komfortable Bedienung eines Bedienterminals durch einen Fahrer eines Kraftfahrzeugs ermöglichen.

Diese Aufgabe wird durch den Gegenstand der unabhängigen Ansprüche 1 und 10 gelöst. Bevorzugte
Weiterbildungen der Erfindung sind in den rückbezogenen Ansprüchen beschrieben, die jeweils einzeln oder in Kombination einen Aspekt der Erfindung darstellen können. Erfindungsgemäß wird nach Anspruch 1 ein Verfahren zum Verschieben einer Bedienposition eines beweglichen Bedienterminals, zwecks Bedienung durch einen Fahrer in einem Fahrzeug, bereitgestellt, umfassend die folgenden Verfahrensschritte:
A) Bereitstellen des Bedienterminals in einer Startposition,
B) Erkennen der Anwesenheit des Fahrzeuges,
C) Ermitteln der Bedienposition des beweglichen Bedienterminals,
D) automatisiertes Verfahren, Verschwenken und/oder Verschieben des Bedienterminals in die ermittelte Bedienposition,
E) Erkennen der Abwesenheit des Fahrzeuges,
F) automatisiertes Verfahren, Verschwenken und/oder Verschieben des Bedienterminals in die Startposition;
wobei Schritt C) et die folgenden Verfahrensschritte umfasst:
a) Bereitstellen einer Abstandssensorvorrichtung an einem Koordinatenursprung eines kartesischen Koordinatensystems mit x-, y- und z-Richtung, wobei die Abstandssensorvorrichtung einen in x- und z-Richtung verschiebbaren Sensor umfasst, der dazu ausgestaltet ist einen Abstand in y-Richtung zu ermitteln,
b) Bereitstellen des Fahrzeuges mit einer Fahrerseite in einem Abstand in y-Richtung zur Abstandssensorvorrichtung,
c) Ermitteln des Abstands in y-Richtung,
d) Ermitteln einer Höhe einer Motorhaube des Fahrzeuges durch Ermitteln des Abstands in y-Richtung während eines Verschiebens des Sensors in z-Richtung und ein Erkennen einer Änderung des ermittelten Abstandes,
e) Ermitteln einer x-Position einer A-Säule des Fahrzeuges durch Ermitteln des Abstands in y-Richtung während eines Verschiebens des Sensors in minus-x-Richtung und ein Erkennen einer Änderung des ermittelten Abstandes unter Berücksichtigung der ermittelten Höhe der Motorhaube,
f) Ermitteln der Bedienposition durch Abziehen eines vordefinierten y-Abstandswertes vom in Schritt c) ermittelten Abstand in y-Richtung, durch Addieren eines vordefinierten z-Abstandswertes zu der in Schritt d) ermittelten Höhe der Motorhaube, und durch Addieren eines vordefinierten x-Abstandswertes zu der in Schritt e) ermittelten x-Position der A-Säule, wobei die Schritte c) bis f) mittels der Abstandsensorvorrichtung automatisiert durchgeführt werden; und wobei der Sensor in zwei zueinander orthogonalen Richtungen verschiebbar ist, und der in y Rich-tung ermittelte Abstand orthogonal zu den x- und z-Richtungen ist.

Weitere erfindungsgemäße Ausführungsformen sind in den Unteransprüchen 2 bis 9 und 11 bis 13 angegeben.

Beim obigen Verfahren wird die Bedienposition des Bedienterminals anhand der Position der A-Säule des Fahrzeugs, sowie der Höhe der Motorhaube des Fahrzeuges automatisiert ermittelt. Das Verfahren basiert darauf, dass physische Eigenschaften des Fahrzeuges, wie die Höhe der Motorhaube, sowie die x-Position der A-Säule automatisiert ermittelt werden. Aufgrund dieser Eigenschaften des Fahrzeuges wird auf die Position des Fahrers im Fahrzeug geschlossen. Es hat sich nämlich gezeigt, dass bei Fahrzeugen mit einer hohen Motorhaube, auch der Fahrer eine erhöhte Sitzposition einnimmt. Für Fahrer von Fahrzeugen mit hoher Motorhaube liegt eine komfortable Bedienposition des Bedienterminals auch entsprechend höher. Als Referenzpunkt für die Bedienposition wird also nicht der Fahrer des Fahrzeuges verwendet, sondern die physischen Eigenschaften des Fahrzeugs und somit das Fahrzeug selbst. Somit ermöglicht das Verfahren, eine für den Fahrer komfortabel Bedienposition zu ermitteln, ohne dabei direkt die Position des Fahrers zu ermitteln. Insbesondere ermöglicht das Verfahren, unabhängig vom Verhalten des Fahrers, das Bedienterminal in einer für den Fahrer komfortablen Bedienposition bereitzustellen. Das erfindungsgemäße Verfahren bestimmt bevorzugt die Position der A-Säule und die Höhe der Motorhaube mittels eines Sensors, der insbesondere in zwei zueinander orthogonalen Richtungen, im Folgenden als x- und z-Richtung bezeichnet, verschiebbar ist. Der Sensor ist bevorzugt dazu ausgestaltet einen Abstand zu einem Objekt in eine y-Richtung zu bestimmen, wobei die y-Richtung orthogonal zur x- und orthogonal zur z-Richtung ist. Ein solcher Sensor ist somit einfach aufgebaut. Da das erfindungsgemäße Verfahren die Bedienposition des Bedienterminals mittels eines solchen Sensors bestimmt, ist das Verfahren auch einfach umzusetzen. Weiterhin mittels nur eines Sensors die Bedienposition ermittelt werden. Dies spart insbesondere Kosten, das auch nur ein Sensor eingesetzt werden muss. Das Verfahren ist somit günstiger und einfacher im Vergleich zu Verfahren, bei denen mehrere Sensoren verwendet werden. Des Weiteren hat das Verfahren den Vorteil, dass es bei unterschiedlichen Fahrzeugtypen mit hoher Zuverlässigkeit anwendbar ist, da nahezu jeder Kraftwagen eine Motorhaube und eine A-Säule aufweist. Des Weiteren weist das Verfahren den Vorteil auf, dass es sehr schnell die Bedienposition des Bedienterminals ermitteln kann, da die Ermittlung der Höhe der Motorhaube und der Position der A-Säule in nur wenigen Verfahrensschritten durchgeführt wird. Des Weiteren ist das Verfahren durch seine Einfachheit auch wenig anfällig für Fehler. Zusammengefasst führt das erfindungsgemäße Verfahren dazu, dass auf einfache, zuverlässige und schnelle Weise die Bedienposition des Bedienterminals ermittelbar ist, was wiederum ermöglicht, dem Fahrer des Kraftfahrzeugs das Bedienterminal auch in der ermittelten Bedienposition zur Verfügung zu stellen. Somit trägt das Verfahren dazu bei, unabhängig vom Verhalten des Fahrers, den Komfort des Fahrers beim Bedienen des Bedienterminals zu erhöhen.

Das Verfahren stellt in einem ersten Verfahrensschritt a) die Abstandssensorvorrichtung am Koordinatenursprung des kartesischen Koordinatensystems mit x-, y- und z-Richtung bereit, wobei die Abstandssensorvorrichtung den in x- und z-Richtung verschiebbaren Sensor umfasst, der dazu ausgestaltet ist den Abstand in y-Richtung zu ermitteln. Grundsätzlich ist es auch möglich, dass die Abstandssensorvorrichtung mehr als einen Sensor umfasst. Beispielsweise kann die Abstandssensorvorrichtung zwei Sensoren umfassen, wobei ein Sensor insbesondere in x-Richtung verschiebbar ist und der zweite Sensor insbesondere in z-Richtung verschiebbar ist. Grundsätzlich kann vorgesehen sein, dass die Abstandssensorvorrichtung zwei Sensoren umfasst, wobei mindestens einer davon bevorzugt dazu ausgestaltete ist, in die x- und z-Rich-tung verschiebbar zu sein. In eine Richtung verschiebbar sein bedeutet im Sinne der Erfindung, dass der Sensor in die positive wie auch in die negative Richtung verschiebbar. In anderen Worten, ist der Sensor entlang der Richtung vor- und zurück verschiebar. Bevorzugt ist allerdings vorgesehen, dass das Verfahren nur einen Sensor umfasst, wobei der Sensor bevorzugt in die x- und z-Richtung verschiebbar ist. Hierdurch wird das Verfahren kostengünstig.

In einem weiteren Verfahrensschritt b) wird das Fahrzeug mit der Fahrerseite in einem Abstand in y-Richtung zur Abstandssensorvorrichtung bereitgestellt. Beispielsweise befindet sich die Fahrerseite auf der linken Seite des Fahrzeugs. In diesem Fall wird das Fahrzeug mit seiner linken Seite in einem Abstand in y-Richtung zur Abstandssensorvorrichtung bereitgestellt. In anderen Worten befindet sich nach dem Bereitstellen des Fahrzeugs die Abstandssensorvorrichtung auf der Fahrerseite des Fahrzeugs. Bevorzugt wird das Fahrzeug derart bereitgestellt, dass die y-Richtung im Wesentlichen senkrecht auf die fahrerseitige Fahrzeugseite gerichtet ist. Dies kann beispielsweise durch bauliche Maßnahmen, wie eine Straße mit Bordstein oder Ähnlichem umgesetzt werden. Im Wesentlichen senkrecht bedeutet, dass Abweichungen von der Senkrechten im Bereich von +/- 15 Grad möglich sind. Bevorzugt wird das Fahrzeug durch Heranfahren an die Abstandssensorvorrichtung bereitgestellt. So kann beispielsweise die Abstandssensorvorrichtung am linken Straßenrand einer Straße stehen, wobei die y-Richtung senkrecht zum Straßenverlauf zeigt und das Fahrzeug fährt derart an die Abstandssensorvorrichtung heran, dass die linke Fahrzeugseite mit dem Abstand in y-Richtung neben der Abstandssensorvorrichtung zum Stehen kommt.

In einem weiteren Verfahrensschritt c) wird der Abstand in y-Richtung ermittelt, wobei dies automatisiert mittels der Abstandsensorvorrichtung durchgeführt wird. Bevorzugt wird in diesem Schritt also der Abstand zwischen der Abstandssensorvorrichtung und der fahrerseitigen Fahrzeugseite ermittelt. Da der Sensor dazu ausgestaltet ist, einen Abstand in y-Richtung zu ermitteln ist dies besonders einfach umzusetzen. Beim Sensor kann es sich beispielsweise um einen Sensor handeln, der mittels einer Laufzeitmessung den Abstand in y-Richtung bestimmt. Bei der Laufzeitmessung wird indirekte durch Messung jener Zeit, die ein Signal für das Durchlaufen der Strecke zu einem Objekt benötigt, die Entfernung zum Objekt ermittelt. So kann beispielsweise ein zeitlich kurzer Lichtpuls vom Sensor ausgesandt werden, der von der fahrerseitigen Fahrzeugseite reflektiert wird, und so wieder zurück zum Sensor läuft. Durch Messen der Laufzeit des Lichtpulses kann der Abstand zwischen dem Sensor und der fahrerseitigen Fahrzeugseite bestimmt werden. Bevorzugt befindet sich der Sensor der Abstandsensorvorrichtung beim Ermitteln des Abstands in y-Richtung in einer Höhe von etwa 80 cm über Bodenniveau, wobei Toleranzen von +/- 30 cm möglich sind. Durch diese Maßnahme kann auf einfache Weise sichergestellt werden, dass durch das Ermitteln des Abstands in y-Richtung, auch der Abstand zwischen fahrerseitiger Fahrzeugseite und Sensor ermittelt wird. Nach Schritt b) ist also der Abstand in y-Richtung zwischen dem Sensor der Abstandssensorvorrichtung und der fahrerseitigen Fahrzeugseite bekannt. Das Ermitteln des Abstands zwischen fahrerseitiger Fahrzeugseite und Sensor, ermöglicht das Ermitteln der y-Position des Bedienterminals. Somit kann darüber die Distanz in y-Richtung des Bedienterminals zum Fahrer festgelegt werden, denn in der Regel befindet sich der Fahrer nicht mittig im Fahrzeug, sondern auf der Fahrerseite.

In einem weiteren Verfahrensschritt d) wird die Höhe der Motorhaube des Fahrzeuges durch Ermitteln des Abstands in y-Richtung während des Verschiebens des Sensors in z-Richtung und ein Erkennen der Änderung des ermittelten Abstandes, ermittelt. Auch dies findet automatisiert mittels der Abstandssensorvorrichtung statt. Bevorzugt wird das Fahrzeug also in Verfahrensschritt b) derart an der Abstandsensorvorrichtung bereitgestellt, dass sich die Abstandssensorvorrichtung bezogen auf die Fahrtrichtung des Fahrzeuges, in etwa neben der Motorhaube des Fahrzeuges befindet. Dies kann beispielsweise durch bauliche Maßnahmen wie eine Stoppeinrichtung eine Haltelinie und/oder eine Schranke umgesetzt werden. Anders ausgedrückt befindet sich in x-Richtung vor der Abstandssensorvorrichtung die bauliche Maßnahme, so dass das Fahrzeug derart neben der Abstandsensorvorrichtung zum Stehen kommt, dass sich die Abstandssensorvorrichtung neben der Motorhaube des Fahrzeuges befindet. Somit lässt sich mittels der Abstandssensorvorrichtung auch die Höhe der Motorhaube ermitteln. Dies geschieht indem der Sensor in z-Richtung, also in der Höhe verschoben wird und während des Verschiebens den Abstand in y-Richtung, also den Abstand zur fahrerseitigen Fahrzeugseite bestimmt. Bevorzugt wird der Sensor von einer geringen Höhe über Bodenniveau in eine große Höhe über Bodenniveau verschoben. Dies ist insbesondere vorteilhaft, da der Sensor sich aufgrund des vorherigen Verfahrensschrittes c) schon auf einer geringen Höhe über Bodenniveau, in etwa 80 cm über Bodenniveau, befindet. Somit beschleunigt sich das Verfahren. Alternativ kann auch vorgesehen sein, dass der Sensor von einer großen Höhe in eine geringere Höhe verschoben wird. Insbesondere beim Verwenden mehrere Sensoren kann dies zu einer Beschleunigung des Verfahrens führen, da derart die Verfahrwege der Sensoren verkürzt werden können. Weiter bevorzugt wird die aktuelle Höhe in der sich der Sensor während des Verschiebens befindet, automatisiert ermittelt. Da beim Verschieben des Sensors sich der vom Sensor ermittelte Abstand in y-Richtung, also der Abstand zur fahrerseitigen Fahrzeugseite, beim Erreichen der Oberkante der Motorhaube in kurzer Zeit stark in der Größe verändert, ändert sich das Messsignals des Sensors sprunghaft. Das Erkennen dieser sprunghaften Änderung des Messsignals ermöglicht die Ermittlung der Höhe der Motorhaube. Beispielsweise kann die sprunghafte Änderung des Messsignals erkannt werden, indem die erste Ableitung des Messsignals ermittelt wird. Somit kann mittels des Sensors die Höhe der Motorhaube bestimmt werden. Beispielsweise beträgt der Abstand zur fahrerseitigen Fahrzeugseite 70 cm. Sobald der Sensor durch das Verschieben in z-Richtung eine Höhe erreicht hat, die in etwas über der Höhe der Motorhaube liegt, wird der Sensor als Abstand in y-Richtung einen Wert ermitteln, der viel größer als 70 cm ist. Beispielsweise kann der Sensor einen Wert von etwa 7 m ermitteln, weil sich auf der gegenüberliegenden Straßenseite im Abstand von etwa 7 m eine Hauswand befindet. Bevorzugt kann vorgesehen sein, dass wenn der Sensor während des Verschiebens in z-Richtung einen Abstand in y-Richtung ermittelt, der größer als ein erster vordefinierter Grenzwert ist, die aktuelle Höhe des Sensors der Höhe der Motorhaube entspricht. Bevorzugt beträgt der erste Grenzwert zwischen 1 m und 2 m. Da die aktuelle Höhe, in der sich der Sensor während des Verschiebens befindet, automatisiert ermittelt wird, ist die Höhe der Motorhaube durch die Höhe des Sensors beim Verändern des Abstandes in y-Richtung von 70 cm auf einen Abstand, der größer als der erste Grenzwert ist, gegeben. Nach diesem Schritt ist also die Höhe der Motorhaube des Fahrzeuges bekannt. Die Höhe der Motorhaube des Fahrzeuges ermöglicht das Ermitteln der Höhe des Bedienterminals. Es hat sich gezeigt, dass Fahrer von Fahrzeugen mit einer hohen Motorhaube eine hohe Bedienposition des Bedienterminals als komfortabel empfinden, und Fahrer von Fahrzeugen mit einer niedrigen Motorhaube eine niedrige Bedienposition des Bedienterminals als komfortabel empfinden.

In einem weiteren Verfahrensschritt e) wird die x-Position der A-Säule des Fahrzeuges durch Ermitteln des Abstands in y-Richtung während eines Verschiebens des Sensors in minus-x-Richtung und ein Erkennen einer Änderung des ermittelten Abstandes unter Berücksichtigung der ermittelten Höhe der Motorhaube, ermittelt. Dieser Schritt findet ebenfalls automatisiert mit der Abstandssensorvorrichtung statt. In diesem Schritt e) findet also ein Ermitteln der x-Position der A-Säule statt, d.h. die Position der A-Säule bezogen auf x-Achse des Koordinatensystems wird ermittelt. Die x-Achse des Koordinatensystems ist bevorzugt parallel zur ursprünglichen Fahrtrichtung des Fahrzeuges, wobei auch hier Toleranzen von +/- 15 Grad möglich sind. Das Ermitteln der x-Position der A-Säule findet analog zum Verfahrensschritt d) statt, wobei dabei die in Verfahrensschritt d) ermittelte Höhe der Motorhaube berücksichtig wird. Der Sensor wird in minus-x-Richtung, also entgegen der ursprünglichen Fahrtrichtung des Fahrzeuges, verschoben und während des Verschiebens wird der Abstand in y-Richtung, also der Abstand zur fahrerseitigen Fahrzeugseite bestimmt. Besonders bevorzugt befindet sich dabei der Sensor auf einer Höhe, die etwas über der ermittelten Höhe der Motorhaube des Fahrzeuges liegt. Bevorzugt befindet sich der Sensor dabei auf einer Höhe die 10 cm bis 20 cm über der ermittelten Höhe der Motorhaube liegt. Weiter bevorzugt wird der Sensor dabei in eine Richtung verschoben, die von der Front des Fahrzeugs zum Heck des Fahrzeugs zeigt. Anders ausgedrückt wird dabei der Sensor von einer x-Position, die in etwa neben der Motorhaube liegt in eine x-Position, die in etwa neben der Fahrertür liegt, verschoben. Somit liegt dazwischen die A-Säule des Fahrzeuges. Weiter bevorzugt wird die aktuelle x-Position, in der sich der Sensor während des Verschiebens befindet, automatisiert ermittelt. Da beim Verschieben des Sensors sich der vom Sensor ermittelte Abstand in y-Richtung, also der Abstand zur fahrerseitigen Fahrzeugseite, beim Erreichen der A-Säule in kurzer Zeit stark in der Größe verändert, ändert sich das Messsignals des Sensors sprunghaft. Das Erkennen dieser sprunghaften Änderung des Messsignals ermöglicht die Ermittlung der x-Position der A-Säule. Beispielsweise kann die sprunghafte Änderung des Messsignals erkannt werden, indem die erste Ableitung des Messsignals ermittelt wird. Somit kann mittels des Sensors die x-Position der A-Säule bestimmt werden. Um auf das obige Zahlenbeispiel aus Verfahrensschritt d) zurückzukommen: Beispielsweise ermittelt der Sensor zu Beginn des Verschiebens einen Wert von etwa 7 m, da der Abstand in y-Richtung in etwa 10 cm über der Höhe der Motorhaube bestimmt wird und sich auf der gegenüberliegenden Straßenseite in einem Abstand von etwa 7 m eine Hauswand befindet. Beim Verschieben des Sensors in minus-x-Richtung, wird der Sensor zu jenem Zeitpunkt einen Wert von etwa 70 cm ermitteln, wenn die x-Position des Sensors, der x-Position der A-Säule entspricht. Da die aktuelle x-Position in der sich der Sensor während des Verschiebens befindet automatisiert ermittelt wird, ist die x-Position der A-Säule durch die x-Position des Sensors beim Verändern des Abstandes in y-Richtung von 7 m auf 70 cm gegeben. Insbesondere, wenn der Sensor während des Verschiebens in minus-x-Richtung einen Abstand in y-Richtung ermittelt, der kleiner als ein zweiter vordefinierter Grenzwert ist, entspricht die aktuelle x-Position des Sensors der x-Position der A-Säule. Bevorzugt beträgt der zweite Grenzwert zwischen 1 m und 2 m. Nach diesem Schritt ist also die x-Position der A-Säule des Fahrzeuges bekannt. Die x-Position der A-Säule ermöglicht das Ermitteln der Position des Bedienterminals relativ zur Fahrzeuglänge. Es hat sich gezeigt, dass Fahrer sich in Fahrzeugen in einem engen Bereich hinter der A-Säule befinden.

In einem weiteren Schritt des Verfahrens ist aufgrund des ermittelten Abstandes in y-Richtung, der ermittelten Höhe der Motorhaube und der ermittelten x-Position der A-Säule die Bedienposition des Bedienterminals feststellbar. Das Verfahren basiert nämlich darauf, dass diese physischen Eigenschaften des Fahrzeuges verwendet werden, um auf die Position des Fahrers im Fahrzeug zu schließen. Dabei wird von einem durchschnittlich großen Fahrer ausgegangen. Es werden also vordefinierte x-,y- und z-Abstandswerte zu den ermittelten Werten addiert und/oder von ihnen subtrahiert. Die Höhe der Motorhaube wird dabei als Ausgangspunkt für die Bedienhöhe des Bedienterminals verwendet. Die x-Position der A-Säule wird als Ausgangsposition für die Position des Bedienterminals entlang der Fahrzeuglänge verwendet und der ermittelte y-Abstandswert wird als Ausgangspunkt für den Abstand des Bedienterminals zum Fahrer verwendet. In Verfahrensschritt f) findet also ein Ermitteln der Bedienposition durch Abziehen eines vordefinierten y-Abstandswertes vom in Schritt c) ermittelten Abstand in y-Richtung, durch Addieren eines vordefinierten z-Abstandswertes zu der in Schritt d) ermittelten Höhe der Motorhaube, und durch Addieren eines vordefinierten x-Abstandswertes zu der in Schritt e) ermittelten x-Position der A-Säule statt. Die vordefinierte x-,y- und z-Abstandswerte sind bevorzugt für eines durchschnittlich großen Fahrer ermittelt worden, so dass ein durchschnittlich großer Fahrer das Bedienterminal in dieser Position bequem bedienen kann. Bevorzugt beträgt der vordefinierte x-Abstandswert zwischen 15 cm und 1 m, der vordefinierte y-Abstandswert zwischen 30 cm und 50 cm, der vordefinierte z-Abstandswert zwischen 15 cm und 1 m. Die so errechnete x,y,z-Position bildet die Bedienposition.

In einer bevorzugten Weiterbildung der Erfindung ist vorgesehen, dass das Bereitstellen des Fahrzeuges mit einer Fahrerseite in einem Abstand in y-Richtung zur Abstandssensorvorrichtung ein Bereitstellen des Fahrzeuges an einer Haltelinie, einer Stoppeinrichtung und/oder einer Schranke umfasst. Dies ermöglicht insbesondere ein einfaches Ermitteln des Abstands in y-Richtung in Verfahrensschritt c), ein einfaches Ermitteln der Höhe der Motorhaube in Verfahrensschritt d) sowie ein einfaches Ermitteln der x-Position der A-Säule in Verfahrensschritt e). Somit vereinfacht und beschleunigt sich dadurch auch das Ermitteln der Bedienposition in Verfahrensschritt f).

In diesem Zusammenhang ist in einer weiteren bevorzugten Weiterbildung der Erfindung vorgesehen, dass das Bereitstellen einer Abstandssensorvorrichtung ein Bereitstellen der Abstandssensorvorrichtung an einer Seite einer Straße in einem Bereich vor der Haltelinie, der Stoppeinrichtung und/oder der Schranke umfasst. Der Bereich vor der Haltelinie, der Stoppeinrichtung und/oder der Schranke bezieht sich dabei bevorzugt auf die Fahrtrichtung des Fahrzeuges. Beispielsweise befindet sich an der linken Seite der Straße die Abstandsensorvorrichtung und auf die Fahrtrichtung bezogen kurz dahinter die Haltelinie, die Stoppeinrichtung und/oder die Schranke. Das Fahrzeug kommt somit derart neben der Abstandsensorvorrichtung zum Stehen, dass sich die Abstandssensorvorrichtung neben der Motorhaube des Fahrzeuges befindet.

In einer weiteren bevorzugten Weiterbildung der Erfindung umfasst das Verfahren zusätzlich den folgenden Schritt: g) Feinjustieren der Bedienposition, durch Aufnahme eines Kamerabildes an der ermittelten Bedienposition mittels einer Kamera, Erkennen einer Position des Fahrers auf dem Kamerabild mittels Bilderkennungsalgorithmen, und Anpassen der ermittelten Bedienposition auf Basis der erkannten Position des Fahrers. Die in Schritt f) ermittelte Bedienposition wird also als Grundlage für ein Feinjustieren verwendet. Das Feinjustieren findet mittels einer Kamera statt, die ein Kamerabild aufnimmt. Da das Kamerabild an der ermittelten Bedienposition aufgenommen wird, wird somit ein Kamerabilde des Fahrers des Fahrzeuges aufgenommen. Als Ausgangslage für das Feinjustieren wird also die ermittelte Bedienposition verwendet, welche schon eine komfortabel Bedienung des Bedienterminals ermöglicht, ohne die Position des Fahrers direkt ermittelt zu haben. Beim Feinjustieren wird nun die Position des Fahrers direkt ermittelt. Zum Feinjustieren des Bedienterminals wird also als Bezugspunkt der Fahrer des Fahrzeuges verwendet. Seine Position wird auf dem Kamerabild mittels Bilderkennungsalgorithmen erkannt, und als Basis für das Anpassen der Bedienposition verwendet. Somit wird die Bedienposition am Fahrer des Fahrzeuges ausgerichtet und ist somit auch für den Fahrer des Fahrzeuges sehr komfortabel. Insbesondere ist die feinjustierte Bedienposition auch für sehr kleine oder sehr große Fahrer komfortabel.

Es handelt sich also um ein Verfahren zum Verschieben des beweglichen Bedienterminals, um eine komfortable Bedienung des Bedienterminals durch den Fahrer zu ermöglichen, wobei das Verfahren auf die Verfahrensschritte des weiter oben beschriebenen Verfahrens zum Ermitteln der Bedienposition zurückgreift.

In einem ersten Verfahrensschritt A) wird das Bedienterminal in der Startposition bereitgestellt. Beim Bedienterminal handelt es sich um ein bewegliches Bedienterminal, also um ein Bedienterminal, das seiner Position relativ zum Fahrzeug verändert, wobei die Position des Fahrzeuges dabei konstant bleibt. Das Bedienterminal wird in der Startposition bereitgestellt, wobei es derart bereitgestellt wird, dass es das Fahrzeug in seinem Fortkommen möglichst nicht hindert. In der Startposition befindet sich das Bedienterminal also beispielsweise vom Straßenrand her zurückversetzt. Anders ausgedrückt ragt das Bedienterminal bevorzugt nicht in die Straße herein.

In einem weiteren Verfahrensschritt B) wird die Anwesenheit des Fahrzeuges erkannt. Hierbei handelt es sich bevorzugt um die Anwesenheit des Fahrzeuges in der Nähe des Bedienterminals. Weiter bevorzugt entspricht dies auch der Anwesenheit des Fahrzeuges in der Nähe der Abstandssensorvorrichtung. Bevorzugt wird die Anwesenheit des Fahrzeuges automatisiert durch die Abstandssensorvorrichtung erkannt. Das Fahrzeug fährt also beispielsweise neben das Bedienterminal und kommt daneben zum Stehen, wobei seine Anwesenheit durch die Abstandssensorvorrichtung erkannt wird.

In einem weiteren Verfahrensschritt C) wird dann mittels des oben beschriebenen Verfahrens zum Ermitteln der Bedienposition die Bedienposition des beweglichen Bedienterminals ermittelt. Dabei wird der Verfahrensschritt b) des Verfahrens zum Ermitteln der Bedienposition, nämlich das Bereitstellen des Fahrzeuges mit der Fahrerseite in einem Abstand in y-Richtung zur Abstandssensorvorrichtung, durch das Heranfahren und zum Stehen kommen des Fahrzeuges neben dem Bedienterminal umgesetzt.

Daraufhin wird das Bedienterminals in einem weiteren Schritt D) automatisiert in die ermittelte Bedienposition verfahren, verschwenkt und/oder verschoben. Nach diesem Schritt befindet sich das Bedienterminal also nicht mehr in der Startposition sondern in der Bedienposition, wodurch es für den Fahrer sehr komfortabel zu bedienen ist. Die Bedienposition bezieht sich bevorzugt auf die Mitte eines Bedienfeldes des Bedienterminals. Das Bedienfeld kann beispielsweise ein Touch-Display und/oder Knöpfe umfassen. Der Fahrer kann durch das Verfahren also das Bedienfeld des Bedienterminals komfortabel vom Fahrersitz aus bedienen. Da sich das Bedienterminal somit auf eine Vorwärtsfahrtrichtung bezogen hinter den Seitenspiegeln des Fahrzeuges befindet, hindert die Bedienposition den Fahrer auch nicht am wieder anfahren, nachdem der Fahrer die Bedienung des Bedienterminals beendet hat.

Bevorzugt erkennt das Bedienterminal, wann der Fahrer den Bedienvorgang beendet hat. Beispielweise ist der Bedienvorgang mit Drücken einer Bestätigungstaste am Bedienterminal, mit dem Öffnen der Schranke und/oder mit der Herausgabe eines Tickets durch das Bedienterminal beendet. Bevorzugt verlässt daraufhin das Fahrzeug das Bedienterminal, wobei das Verfahren in einem weiteren Verfahrensschritt E) die Abwesenheit des Fahrzeuges erkennt. Es kann also vorgesehen sein, dass das Verfahren die Abwesenheit des Fahrzeuges auf Basis des Bedienvorganges am Bedienterminal erkennt. Alternativ oder zusätzlich kann vorgesehen sein, dass das Verfahren die Abwesenheit des Fahrzeuges durch zusätzliche Maßnahmen erkennt. Beispielsweise kann vorgesehen sein, dass das Verfahren die Abwesenheit des Fahrzeuges erkennt, in dem eine Anwesenheit des Fahrzeuges an einem in x-Richtung weiter vorne liegenden Punkt erkannt wird.

Aufgrund der erkannten Abwesenheit des Fahrzeuges wird anschließend, um einem weiteren Fahrzeug das vereinfachte Heranfahren an das Bedienterminal zu ermöglichen, das Bedienterminal in Verfahrensschritt F) automatisierte in die Startposition verfahren, verschwenken und/oder verschoben.

In Zusammenhang mit den weiter oben erwähnten Möglichkeiten hinsichtlich des Erkennens der Anwesenheit bzw. des Erkennens der Abwesenheit des Fahrzeuges, ist in einer bevorzugten Weiterbildung der Erfindung vorgesehen, dass das Erkennen der Anwesenheit und/oder das Erkennen der Abwesenheit des Fahrzeuges ein Ermitteln des Abstandes in y-Richtung mittels des Sensors der Abstandssensorvorrichtung und ein Vergleichen des gemessenen Abstandes mit einem Grenzwert umfasst. Insbesondere ist also vorgesehen, dass zum Erkennen der Anwesenheit und/oder Abwesenheit des Fahrzeuges die Abstandssensorvorrichtung eingesetzt wird. Somit wird also durch Ermitteln des Abstandes in y-Richtung auch erkannt, ob ein Fahrzeug anwesend ist oder nicht. Hierfür ist bevorzugt vorgesehen, dass wenn die Abstandssensorvorrichtung für eine Zeit von mindestens 2 Sekunden, bevorzugt von mindestens 5 Sekunden einen Abstand in y-Richtung von kleiner als 3 m, bevorzugt kleiner als 2 m, weiter bevorzugt kleiner als 1,5 m ermittelt, die Anwesenheit des Fahrzeuges erkannt wird. Analog wird die Abwesenheit des Fahrzeuges erkannt, wenn die Abstandssensorvorrichtung für eine Zeit von mindestens 2 Sekunden, bevorzugt von mindestens 5 Sekunden einen Abstand in y-Richtung von größer als 2 m, bevorzugt größer als 3 m, weiter bevorzugt größer als 4 m ermittelt.

Ebenfalls in Zusammenhang mit den Möglichkeiten hinsichtlich des Erkennens der Anwesenheit bzw. des Erkennens der Abwesenheit des Fahrzeuges, ist in einer bevorzugten Weiterbildung der Erfindung vorgesehen, dass das Erkennen der Anwesenheit und/oder das Erkennen der Abwesenheit des Fahrzeuges ein Ermitteln eines Druckes, einer Kraft und/oder eines Gewichtes mittels eines Waagesensors umfasst. Es kann also alternativ oder zusätzlich ein Waagesensor verwendet werden, der den Druck, die Kraft und/oder das Gewicht des Fahrzeuges auf der Straße erfasst. Bevorzugt ist der Waagesensor im Bereich neben dem Bedienterminal und/oder im Bereich neben der Abstandssensorvorrichtung angebracht. Weiter bevorzugt ist der Waagesensors am Boden der Fahrbahn angebracht. Insbesondere ist der Waagesensor im Bereich vor der Stoppeinrichtung, der Haltelinie und/oder der Schranke angebracht, aufgrund derer das Fahrzeug neben der Abstandsensorvorrichtung und/oder neben dem Bedienterminal zum Stehen kommt. Alternativ oder zusätzlich kann der Waagesensor im Bereich nach der Stoppeinrichtung, der Haltelinie und/oder der Schranke angebracht sein, so dass durch Erkennen der Anwesenheit des Fahrzeuges hinter der Stoppeinrichtung, der Haltelinie und/oder der Schranke, die Abwesenheit des Fahrzeuges vor dem Bedienterminal ermittelt werden kann. Das zusätzliche Verwenden eines Waagesensors verbessert insbesondere die Fehleranfälligkeit des Verfahrens, da die Anwesenheit bzw. Abwesenheit des Fahrzeuges über eine Methode erkannt wird, die spezifisch auf Fahrzeuge reagiert. Fehlerkennungen aufgrund von zufällig vorbeilaufenden Personen sind mittels dieser Methode nicht möglich.

Gemäß einer weiteren bevorzugten Weiterbildung der Erfindung ist vorgesehen, dass das Bereitstellen des Bedienterminals in einer Startposition ein Bereitstellen des Bedienterminals derart umfasst, dass das Fahrzeug auf im Wesentlichen direktem Weg zu einer Haltelinie, einer Stoppeinrichtung und/oder einer Schranke fahren kann. Wie bereits erwähnt wird das Bedienterminal in der Startposition bereitgestellt, die derart gewählt ist, dass das Fahrzeug in seinem Fortkommen möglichst nicht durch das Bedienterminal gehindert ist. Insbesondere befindet sich also die Startposition des Bedienterminals zurückversetzt neben dem Straßenrand, im Bereich vor der Haltelinie, der Stoppeinrichtung und/oder der Schranke.

Erfindungsgemäß wird weiterhin eine Vorrichtung zur Durchführung des obigen Verfahrens zum Verschieben eines beweglichen Bedienterminals bereitgestellt, umfassend eine Abstandssensorvorrichtung, eine Steuereinheit und ein bewegliches Bedienterminal, wobei die Abstandssensorvorrichtung einen in zwei zueinander orthogonalen Richtungen verschiebbaren Sensor umfasst, und wobei der Sensor dazu ausgestaltet ist einen Abstand in eine Richtung zu ermitteln, die orthogonal zu den zwei Richtung ist, in die der Sensor verschiebbar ist, wobei das bewegliche Bedienterminal automatisiert von einer Startposition in eine Bedienposition verfahrbar, verschwenkbar und/oder verschiebbar ist und wobei die Steuereinheit zur Durchführung des Verfahrens hergerichtet ist. Besonders bevorzugt ist die Vorrichtung auch zur Durchführung des Verfahrens zum Ermitteln der Bedienposition des beweglichen Bedienterminals geeignet. Hierfür ist also die Steuereinheit zur Durchführung des Verfahrens zum Ermitteln der Bedienposition des beweglichen Bedienterminals hergerichtet. Grundsätzlich ist möglich, dass die Abstandssensorvorrichtung mehr als einen Sensor umfasst. Bevorzugt umfasst die Abstandssensorvorrichtung zwei Sensoren, wobei wenigstens einer in zwei zueinander orthogonalen Richtungen verschiebbar ist oder der eine Sensor in eine erste Richtung verschiebbar ist und der zweite Sensor in eine zweite Richtung, die orthogonal zur ersten Richtung ist, verschiebbar ist. Zwei Sensoren beschleunigen das Verfahren beträchtlich, da beispielsweise der erste Sensor den Abstand in y-Richtung in Verfahrensschritt c) ermitteln kann während der zweite Sensor die Höhe der Motorhaube in Verfahrensschritt d) ermitteln kann.

Das bewegliche Bedienterminal ist dazu ausgebildet, dass seine Position relativ zum Fahrzeug automatisiert verändert werden kann. Beispielsweis kann das Bedienterminal an einem Roboterarm aufgehängt sein. Der Roboterarm kann beispielsweise mehrere Gelenke umfassen, so dass durch Veränderung der Gelenkwinkel sich die Position des Bedienterminals ändert. Alternativ oder zusätzlich kann das Bedienterminal einen höhenverstellbaren Standfuß umfassen, der auf einer Schiene automatisiert verfahren werden kann. Weiter alternativ oder zusätzlich kann das Bedienterminal über Räder verfügen.

Die Steuereinheit der Vorrichtung steuert nicht nur die Bewegung des Bedienterminals sondern auch die Bewegung des verschiebbaren Sensors. Insbesondere loggt die Steuereinheit die aktuelle Position des Sensors und des Bedienterminals mit. Des Weiteren verarbeitet die Steuereinheit den vom Sensor ermittelten Abstand und generiert auf dessen Basis Steuerbefehle für den Sensor und/oder das Bedienterminal.

Weiter bevorzugt kann die Vorrichtung einen Waagesensors umfassen, der dazu ausgestaltet ist einen Druck, eine Kraft und/oder ein Gewicht zu erfassen. Bevorzugt ist der Waagesensor im Bereich neben dem Bedienterminal und/oder im Bereich neben der Abstandssensorvorrichtung angebracht. Weiter bevorzugt ist der Waagesensors am Boden der Fahrbahn angebracht. Bevorzugt verarbeitet die Steuereinheit auch Signale vom Waagesensor.

Bevorzugt kann die Vorrichtung eine Stoppeinrichtung, eine Haltelinie und/oder eine Schranke umfassen. Insbesondere ist die Stoppeinrichtung, die Haltelinie und/oder die Schranke derart angebracht, dass aufgrund der Stoppeinrichtung, der Haltelinie und/oder der Schranke das Fahrzeug neben der Abstandsensorvorrichtung und/oder neben dem Bedienterminal zum Stehen kommt.

Weiter bevorzugt kann die Vorrichtung eine Kamera umfassen. Die Kamera ist derart ausgebildet, dass sie automatisiert ein Kamerabild von der in Schritt f) ermittelten Bedienposition aufnehmen kann. Bevorzugt ist die Kamera also mit der Steuereinheit kommunikationstechnisch verbunden.

Weiter bevorzugt kann die Vorrichtung mit einer optischen Kennzeichenerkennung gekoppelt sein.

Weiter bevorzugt kann die Vorrichtung mit einer Datenbank in Verbindung stehen.

Weiter bevorzugt kann die Vorrichtung mit einer automatischen Einlassvorrichtung verbunden sein.

Nachfolgend wird die Erfindung anhand bevorzugter Ausführungsbeispiele unter Bezugnahme auf die Zeichnungen weiter beschrieben. In den Zeichnungen zeigen:
- Fig. 1: eine schematische Draufsicht auf ein Fahrzeug und eine Vorrichtung zur Durchführung eines Verfahrens zum Verschieben eines beweglichen Bedienterminals, zwecks Bedienung durch einen Fahrer in dem Fahrzeug, gemäß einem bevorzugten Ausführungsbeispiel der Erfindung, und
- Fig. 2: eine schematische Seitenansicht des Fahrzeuges und der Vorrichtung aus Figur 1.

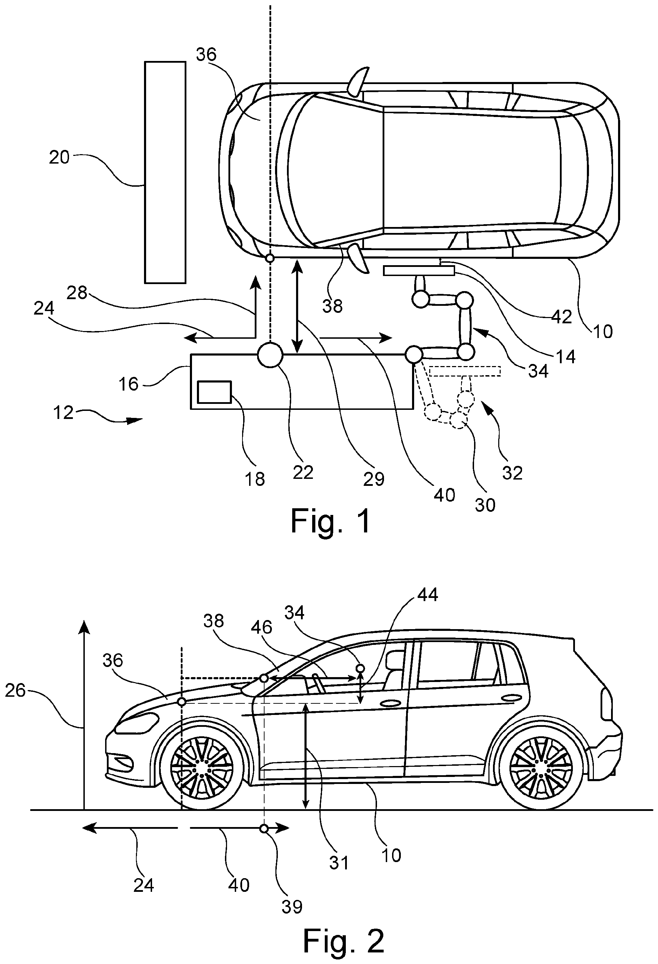

Figuren 1 zeigt ein Fahrzeug 10 sowie eine Vorrichtung 12 zur Durchführung eines Verfahrens zum Verschieben eines beweglichen Bedienterminals 14, zwecks Bedienung durch einen Fahrer in dem Fahrzeug 10, wobei Figur 1 eine Draufsicht dargestellt ist. Figur 2 zeigt eine Seitenansicht des Fahrzeuges 10 aus Figur 1, wobei zwecks Übersichtlichkeit die Vorrichtung 12 in Figur 2 nicht dargestellt ist. Die Vorrichtung 12 umfasst in diesem Ausführungsbeispiel das bewegliche Bedienterminal 14, eine Abstandssensorvorrichtung 16, eine Steuereinheit 18, sowie eine Haltelinie 20. Die Abstandssensorvorrichtung 16 umfasst einen in zwei zueinander orthogonale Richtungen verschiebbaren Sensor 22, der dazu ausgestaltet ist, einen Abstand in eine Richtung zu ermitteln, die orthogonal zu den zwei Richtung ist, in die der Sensor 22 verschiebbar ist. In diesem bevorzugten Ausführungsbeispiel ist der Sensor in x-Richtung 24 sowie in z-Richtung 26 verschiebbar und ermittelt einen Abstand in y-Richtung 28. Dass der Sensor 22 in x-Richtung 24 sowie in z-Richtung 26 verschiebbar ist bedeutet insbesondere auch, dass der Sensor 22 in minus-z-Richtung sowie in minus-x-Richtung 40 verschiebbar ist. Das bewegliche Bedienterminal 14 kann mittels eines Roboterarmes 30 automatisiert von einer Startposition 32 in eine Bedienposition 34 verschwenkt werden.

Im Folgenden werden die Schritte des Verfahrens zum Verschieben des beweglichen Bedienterminals 14, zwecks Bedienung durch den Fahrer in dem Fahrzeug 10 mit Bezugnahme auf die Figuren 1 und 2 erläutert.

In einem ersten Schritt A) wird das Bedienterminal 14 in der Startposition 32 bereitgestellt. Die Startposition 32 ist derart, dass sich das Bedienterminal 14 vom Straßenrand zurückversetzt ist. In Figur 1 ist das Bedienterminal 14 in der Startposition 32 gestrichelt dargestellt.

In einem weiteren Schritt B) wird die Anwesenheit des Fahrzeuges 10 erkannt. Im hier bevorzugten Ausführungsbeispiel wird dieser Schritt mittels des Sensors 22 der Abstandssensorvorrichtung 16 durchgeführt. Der Sensor misst einen Abstand in y-Richtung 28. Bevor das Fahrzeug 10 vor der Haltelinie 20 war (nicht dargestellt), wurde vom Sensor ein Abstand ermittelt, der größer als 3 m ist. Durch das Heranfahren des Fahrzeuges 10 an die Haltelinie 10 hat sich der vom Sensor 22 ermittelte Abstand verringert. Der Sensor 22 hat für länger als 2 Sekunden einen Abstand, der geringer als 1,5 m ist, registriert und so die Anwesenheit des Fahrzeuges 10 erkannt.

In weiteren Schritten wird die Bedienposition 34 des beweglichen Bedienterminals 14 ermittelt. Hierfür wird vom Sensor 22 ein Abstand in y-Richtung 28, also der Abstand 29 vom Sensor 22 zur Fahrzeugseite bestimmt. Im hier gezeigten Ausführungsbeispiel sei dieser Abstand 29 auf 1,2 m bestimmt worden.

In einem weiteren Schritt wird eine Höhe 31 einer Motorhaube 36 des Fahrzeuges 10 bestimmt. Hierfür wird der Sensor 22, während der Sensor 22 den Abstand in y-Richtung 28 misst, in z-Richtung 26 verschoben. Die Messpunkte, die der Sensor 22 dabei abtastet, sind besonders gut in Figur 2 zu erkennen. Sobald der Sensor 22 die Oberkannte der Motorhaube 36 erreicht hat, vergrößert sich der vom Sensor 22 bestimmt Abstand in y-Richtung 28 stark.

Da die aktuelle Höhe, in der sich der Sensor 22 während des Verschiebens befindet, bekannt ist, kann derart die Höhe 31 der Motorhaube 36 bestimmt werden. Im hier gezeigten Ausführungsbeispiel wird dies derart umgesetzt, dass wenn der Sensor 22 während des Verschiebens in z-Richtung 26 einen Abstand in y-Richtung 28 ermittelt, der größer als 1,5 m ist, die aktuelle Höhe des Sensors 22 der Höhe 31 der Motorhaube 36 entspricht.

In einem weiteren Schritt wird eine x-Position 39 einer A-Säule 38 des Fahrzeuges 10 bestimmt. Hierfür wird der Sensor 22, während der Sensor 22 den Abstand in y-Richtung 28 misst, in minus-x-Richtung 40, also entgegen der x-Richtung 24 verschoben. Der Sensor 22 befindet sich dabei 10 cm über der ermittelten Höhe 31 der Motorhaube 36. Die Messpunkte, die der Sensor 22 dabei abtastet, sind ebenfalls besonders gut in Figur 2 zu erkennen. Sobald der Sensor 22 nun die A-Säule 38 erreicht hat verringert sich der vom Sensor 22 bestimmt Abstand in y-Richtung 28 stark.

Da die aktuelle x-Position in der sich der Sensor 22 während des Verschiebens befindet, bekannt ist, kann derart die x-Position 39 der A-Säule 38 bestimmt werden. Im hier gezeigten Ausführungsbeispiel wird dies derart umgesetzt, dass wenn der Sensor 22 während des Verschiebens in minus-x-Richtung 40 einen Abstand in y-Richtung 28 ermittelt, der kleiner als 1,5 m ist, die aktuelle x-Position des Sensors 22 der x-Position 39 der A-Säule 38 entspricht.

In einem weiteren Schritt wird die Bedienposition 34 ermittelt, indem vom ermittelten Abstand 29 in y-Richtung 26 ein vordefinierter y-Abstandswert 42 abgezogen wird, zur ermittelten Höhe 31 der Motorhaube 36 ein vordefinierten z-Abstandswerte addiert wird, und zur ermittelten x-Position 39 der A-Säule 38 ein vordefinierter x-Abstandswert 46 addiert wird.

In einem weiteren Schritt wird das Bedienterminal 14 automatisiert in die Bedienposition 32 verschwenkt. Die Bedienposition 32 entspricht dabei der Position einer Mitte eines Bediendisplays des Bedienterminals. Der Fahrer des Fahrzeuges 10 kann nun komfortabel vom Fahrzeug aus das Bedienterminal 14 bedienen.

Nachdem der Fahrer die Bedienung des Bedienterminals 14 abgeschlossen hat wird vom Verfahren in einem weiteren Schritt die Abwesenheit des Fahrzeuges 10 erkannt. Im vorliegenden Ausführungsbeispiel wird die Abwesenheit des Fahrzeuges 10 auf Basis des Bedienvorganges am Bedienterminal 14 erkannt. Der Fahrer hat seinen Bedienvorgang durch Bestätigen der OK-Taste beendet.

Daraufhin wird in einem weiteren Schritt das Bedienterminal 14 in die Startposition 32 zurückgeschwenkt, um einem eventuell nachfolgenden Fahrzeug das Heranfahren zu erleichtern.

Gemäß einer weiteren Ausgestaltung des Verfahrens, kann es vorteilhaft sein, dass zusätzlich das Autokennzeichen eines Fahrzeuges 10 optisch erkannt wird, in einem Datenspeicher abgelegt wird und mittels einer Datenbank abfragbar ist, ob dieses Kennzeichen hinterlegt ist und welche Dienstleistungen und/oder Produkte zu diesem Kennzeichen hinterlegt sind. Dies hat den Vorteil, dass der Autofahrer seine Dienste und/oder Produkte über das Internet buchen kann und diese seinem Fahrzeug 10 über das Autokennzeichen zugeordnet werden.

Beispielsweise kann dem Autofahrer im Display des Bedienterminals 14 der Vorrichtung 12 angezeigt werden, welche Produkte und Dienstleistungen er ausgewählt hat. Wenn ein Produkt hinterlegt ist, kann der Fahrer dieses angebotene Produkt am Bedienterminal 14 bestätigen, weitere und/oder Dienstleistungen auswählen bzw. bestätigen (Opt-IN), oder ändern (Opt-Out). Das bewegen/weiterfahren des Fahrzeug 10 vom Bedienterminal 14 kann beispielsweise als Bestätigung der gebuchten Produkte und/oder Dienstleistungen gelten und ggf. einen Rechnungsbeleg erzeugen. Alternativ können die Produkte und/oder Dienstleistungen auf dem Display des Bedienteils 12 nach Bestätigung des Fahrers als gebucht angezeigt werden, und/oder wenn das Fahrzeug 10 nicht mehr vom Sensor erfasst wird und die Abwesenheit/Durchfahrt des Fahrzeuges 10 durch entsprechende Sensoren bestätigt wird.

Gemäß einer weiteren Ausgestaltung des Verfahrens, kann es vorteilhaft sein, dass beispielsweise über das Kennzeichen des Fahrzeuges 10 die Produkte und/oder Dienstleistungen über das Internet gebucht werden, so dass eine personenbezogene Eingangskontrolle entfällt und der Zugang für das Fahrzeug, beispielsweise zu einer Waschanlage, automatisch über die Erkennung des Kennzeichens erfolgt, und die gebuchten Produkte und/oder Dienstleistungen mittels der Vorrichtung 12 dem jeweiligen Fahrzeugt 10 zugeordnet werden bzw. zur Anwendung gebracht werden.

Gemäß einer bevorzugten Ausgestaltung des Verfahrens, kann vorzugsweise über die Kennung des Nummernschilds eines Fahrzeuges 10, welches in einer Datenbank hinterlegt ist und wobei diese Datenbank in Kontakt mit der Vorrichtung 12 steht, eine über das Bedienterminal 14 und/oder über das Internet erfolgte Auswahl von Produkt/en und/oder Dienstleistungen diesem Fahrzeug automatisch, zur nachfolgenden Prozessierung, zugeordnet werden.

Gemäß einer weiteren bevorzugten Ausgestaltung des Verfahrens, kann über die Kennung des Nummernschilds eines Fahrzeuges 10 die Vorrichtung 14 eine Einlasskontrolle für das Fahrzeug 10 steuern.

### Bezugszeichenliste

- 10: Fahrzeug
- 12: Vorrichtung
- 14: Bedienterminal
- 16: Abstandssensorvorrichtung
- 18: Steuereinheit
- 20: Haltelinie
- 22: Sensor
- 24: x-Richtung
- 26: z-Richtung
- 28: y-Richtung
- 29: Abstand zwischen Sensor und Fahrzeugseite
- 30: Roboterarm
- 31: Höhe der Motorhaube
- 32: Startposition
- 34: Bedienposition
- 36: Motorhaube
- 38: A-Säule
- 39: x-Position
- 40: minus-x-Richtung
- 42: vordefinierte y-Abstandswert
- 44: vordefinierte z-Abstandswert
- 46: vordefinierte x-Abstandswert

## Patentansprüche

1. Verfahren zum Verschieben einer Bedienposition (34) eines beweglichen Bedienterminals (14), zwecks Bedienung durch einen Fahrer in einem Fahrzeug (10), umfassend die folgenden Verfahrensschritte:
A) Bereitstellen des Bedienterminals (14) in einer Startposition (32),
B) Erkennen der Anwesenheit des Fahrzeuges (10),
C) Ermitteln der Bedienposition (34) des beweglichen Bedienterminals (14),
D) automatisiertes Verfahren, Verschwenken und/oder Verschieben des Bedienterminals (14) in die ermittelte Bedienposition (34),
E) Erkennen der Abwesenheit des Fahrzeuges (10),
F) automatisiertes Verfahren, Verschwenken und/oder Verschieben des Bedienterminals (14) in die Startposition (32);
wobei Schritt C) et die folgenden Verfahrensschritte umfasst:
a) Bereitstellen einer Abstandssensorvorrichtung (16) an einem Koordinatenursprung eines kartesischen Koordinatensystems mit x-, y- und z-Richtung (24, 28, 26), wobei die Abstandssensorvorrichtung (16) einen in x- und z-Richtung (24, 26) verschiebbaren Sensor (22) umfasst, der dazu ausgestaltet ist einen Abstand in y-Richtung (28) zu ermitteln,
b) Bereitstellen des Fahrzeuges (10) mit einer Fahrerseite in einem Abstand (29) in y-Rich-tung (28) zur Abstandssensorvorrichtung (16),
c) Ermitteln des Abstands (29) in y-Richtung (28),
d) Ermitteln einer Höhe (31) einer Motorhaube (36) des Fahrzeuges (10) durch Ermitteln des Abstands in y-Richtung (28) während eines Verschiebens des Sensors (22) in z-Rich-tung (26) und ein Erkennen einer Änderung des ermittelten Abstandes,
e) Ermitteln einer x-Position (39) einer A-Säule (38) des Fahrzeuges (10) durch Ermitteln des Abstands in y-Richtung (28) während eines Verschiebens des Sensors (22) in minus-x-Richtung (40) und ein Erkennen einer Änderung des ermittelten Abstandes unter Berücksichtigung der ermittelten Höhe (31) der Motorhaube (36),
f) Ermitteln der Bedienposition (34) durch Abziehen eines vordefinierten y-Abstandswertes (42) vom in Schritt c) ermittelten Abstand (29) in y-Richtung (28), durch Addieren eines vordefinierten z-Abstandswertes (44) zu der in Schritt d) ermittelten Höhe (31) der Motorhaube (36), und durch Addieren eines vordefinierten x-Abstandswertes (46) zu der in Schritt e) ermittelten x-Position (39) der A-Säule (38),
wobei die Schritte c) bis f) mittels der Abstandsensorvorrichtung (16) automatisiert durchgeführt werden;
und wobei der Sensor (22) in zwei zueinander orthogonalen Richtungen verschiebbar ist, und der in y Richtung ermittelte Abstand orthogonal zu den x- und z-Richtungen ist.

2. Verfahren nach Anspruch 1, wobei das Bereitstellen des Fahrzeuges (10) mit einer Fahrerseite in einem Abstand (29) in y-Richtung (28) zur Abstandssensorvorrichtung (16) ein Bereitstellen des Fahrzeuges (10) an einer Haltelinie (20), einer Stoppeinrichtung und/oder einer Schranke umfasst.

3. Verfahren nach Anspruch 1 oder 2, wobei das Bereitstellen einer Abstandssensorvorrichtung (16) ein Bereitstellen der Abstandssensorvorrichtung (16) an einer Seite einer Straße in einem Bereich vor der Haltelinie (20), der Stoppeinrichtung und/oder der Schranke umfasst.

4. Verfahren nach einem der vorhergehenden Ansprüche, wobei das Verfahren zusätzlich den folgenden Schritt umfasst: g) Feinjustieren der Bedienposition (34), durch Aufnahme eines Kamerabildes an der ermittelten Bedienposition (34), Erkennen einer Position des Fahrers auf dem Kamerabild mittels Bilderkennungsalgorithmen, und Anpassen der ermittelten Bedienposition (34) auf Basis der erkannten Position des Fahrers.

5. Verfahren nach Anspruch 1 bis 4, wobei das Erkennen der Anwesenheit und/oder das Erkennen der Abwesenheit des Fahrzeuges (10) ein Ermitteln des Abstandes (29) in y-Richtung (28) mittels des Sensors (22) der Abstandssensorvorrichtung (16) und ein Vergleichen des gemessenen Abstandes mit einem Grenzwert umfasst.

6. Verfahren nach Anspruch 1 bis 5, wobei das Erkennen der Anwesenheit und/oder das Erkennen der Abwesenheit des Fahrzeuges (10) ein Ermitteln eines Druckes, einer Kraft und/oder eines Gewichtes mittels eines Waagesensors umfasst.

7. Verfahren nach einem der Ansprüche 1 bis 6, wobei das Bereitstellen des Bedienterminals (14) in einer Startposition (32) ein Bereitstellen des Bedienterminals (14) derart umfasst, dass das Fahrzeug (10) auf im Wesentlichen direktem Weg zu einer Haltelinie (20), einer Stoppeinrichtung und/oder einer Schranke fahren kann.

8. Verfahren nach einem der Ansprüche 1 bis 7, wobei das Autokennzeichen eines Fahrzeuges 10 optisch erkannt wird, und über die Kennung des Nummernschilds des Fahrzeuges (10), welches in einer Datenbank hinterlegt ist, eine über das Bedienterminal (14) und/oder über das Internet erfolgte Auswahl von Produkt/en und/oder Dienstleistungen diesem Fahrzeug automatisch, zur nachfolgenden Prozessierung, zugeordnet wird.

9. Verfahren nach einem der Ansprüche 1 bis 8, wobei über die Kennung des Nummernschilds eines Fahrzeuges (10) die Vorrichtung (14) eine Einlasskontrolle für das Fahrzeug (10) steuert.

10. Vorrichtung (12) zur Durchführung des Verfahrens nach einem der Ansprüche 1 bis 7 umfassend eine Abstandssensorvorrichtung (16), eine Steuereinheit (18) und ein bewegliches Bedienterminal (14), wobei die Abstandssensorvorrichtung (16) einen in zwei zueinander orthogonalen Richtungen (24, 26) verschiebbaren Sensor (22) umfasst, und wobei der Sensor (22) dazu ausgestaltet ist einen Abstand in eine Richtung (28) zu ermitteln, die orthogonal zu den zwei Richtung (24, 26) ist, in die der Sensor (22) verschiebbar ist, wobei das bewegliche Bedienterminal (14) automatisiert von einer Startposition (32) in eine Bedienposition (34) verfahrbar, verschwenkbar und/oder verschiebbar ist und wobei die Steuereinheit (18) zur Durchführung des Verfahrens hergerichtet ist.

11. Vorrichtung (12) nach Anspruch 10, wobei die Vorrichtung (12) mit einer optischen Kennzeichenerkennung gekoppelt ist.

12. Vorrichtung (12) nach Anspruch 10 oder 11, wobei die Vorrichtung (12) mit einer Datenbank in Verbindung steht.

13. Vorrichtung (12) nach einem der Ansprüche 10 bis 12, wobei die Vorrichtung (12) mit einer automatischen Einlassvorrichtung verbunden ist.

## Claims

1. Method for displacing an operating position (34) of a mobile operator terminal (14) for the purpose of operation by a driver in a vehicle (10), comprising the following method steps:
A) providing the operator terminal (14) in a starting position (32),
B) detecting the presence of the vehicle (10),
C) determining the operating position (34) of the mobile operator terminal (14),
D) automatically moving, pivoting and/or displacing the operator terminal (14) into the determined operating position (34),
E) detecting the absence of the vehicle (10),
F) automatically moving, pivoting and/or displacing the operator terminal (14) into the starting position (32); wherein step C) comprises the following method steps:
a) providing a distance sensor device (16) at a coordinate origin of a Cartesian coordinate system with an x, y and z direction (24, 28, 26), wherein the distance sensor device (16) comprises a sensor (22) that can be displaced in the x and z direction (24, 26) and is configured to determine a distance in the y direction (28),
b) providing the vehicle (10) with a driver's side at a distance (29) from the distance sensor device (16) in the y direction (28),
c) determining the distance (29) in the y direction (28),
d) determining a height (31) of a bonnet (36) of the vehicle (10) by determining the distance in the y direction (28) as the sensor (22) is displaced in the z direction (26) and detecting a change in the determined distance,
e) determining an x position (39) of an A pillar (38) of the vehicle (10) by determining the distance in the y direction (28) as the sensor (22) is displaced in the negative x direction (40) and detecting a change in the determined distance while taking the determined height (31) of the bonnet (36) into account,
f) determining the operating position (34) by subtracting a predefined y distance value (42) from the distance (29) in the y direction (28) determined in step c), by adding a predefined z distance value (44) to the height (31) of the bonnet (36) determined in step d), and by adding a predefined x distance value (46) to the x position (39) of the A pillar (38) determined in step e),
wherein steps c) to f) are carried out automatically by means of the distance sensor device (16);
and wherein the sensor (22) can be displaced in two mutually orthogonal directions, and the distance determined in the y direction is orthogonal to the x and z directions.

2. Method according to Claim 1, wherein providing the vehicle (10) with a driver's side at a distance (29) from the distance sensor device (16) in the y direction (28) comprises providing the vehicle (10) at a stop line (20), a stopping device and/or a barrier.

3. Method according to Claim 1 or 2, wherein providing a distance sensor device (16) comprises providing the distance sensor device (16) on one side of a road in an area in front of the stop line (20), the stopping device and/or the barrier.

4. Method according to one of the preceding claims, wherein the method additionally comprises the following step: g) finely adjusting the operating position (34) by recording a camera image at the determined operating position (34), detecting a position of the driver on the camera image by means of image recognition algorithms, and adapting the determined operating position (34) on the basis of the detected position of the driver.

5. Method according to Claim 1 to 4, wherein the detection of the presence and/or the detection of the absence of the vehicle (10) comprises determining the distance (29) in the y direction (28) by means of the sensor (22) of the distance sensor device (16) and comparing the measured distance with a limiting value.

6. Method according to Claim 1 to 5, wherein the detection of the presence and/or the detection of the absence of the vehicle (10) comprises determining a pressure, a force and/or a weight by means of a scale sensor.

7. Method according to one of Claims 1 to 6, wherein providing the operator terminal (14) in a starting position (32) comprises providing the operator terminal (14) in such a way that the vehicle (10) can move on a substantially direct path to a stop line (20), a stopping device and/or a barrier.

8. Method according to one of Claims 1 to 7, wherein the registration number of a vehicle (10) is detected optically and, via the identification of the number plate of the vehicle (10), which is stored in a database, a selection of product/s and/or services, carried out via the operator terminal (14) and/or via the internet, is assigned automatically to this vehicle for subsequent processing.

9. Method according to one of Claims 1 to 8, wherein the device (14) controls an admission controller for the vehicle (10) via the identification of the number plate of a vehicle (10).

10. Device (12) for carrying out the method according to one of Claims 1 to 7, comprising a distance sensor device (16), a control unit (18) and a mobile operator terminal (14), wherein the distance sensor device (16) comprises a sensor (22) that can be displaced in two mutually orthogonal directions (24, 26), and wherein the sensor (22) is configured to determine a distance in a direction (28) which is orthogonal to the two directions (24, 26) in which the sensor (22) can be displaced, wherein the mobile operator terminal (14) can be moved, pivoted and/or displaced automatically from a starting position (32) into an operating position (34), and wherein the control unit (18) is prepared to carry out the method.

11. Device (12) according to Claim 10, wherein the device (12) is coupled to an optical number plate recognition system.

12. Device (12) according to Claim 10 or 11, wherein the device (12) is connected to a database.

13. Device (12) according to one of Claims 10 to 12, wherein the device (12) is connected to an automatic admission device.

## Revendications

1. Procédé permettant de décaler une position de service (34) d'un terminal de service mobile (14) en vue de son utilisation par un conducteur dans un véhicule (10), comprenant les étapes de procédé suivantes consistant à :
A) présenter le terminal de service (14) dans une position initiale (32),
B) détecter la présence du véhicule (10),
C) déterminer la position de service (34) du terminal de service mobile (14),
D) déplacer, faire pivoter et/ou décaler de manière automatisée le terminal de service (14) dans la position de service déterminée (34),
E) détecter l'absence du véhicule (10),
F) déplacer, faire pivoter et/ou décaler de manière automatisée le terminal de service (14) dans la position initiale (32) ;
dans lequel l'étape C) comprend les étapes de procédé suivantes consistant à :
a) présenter un dispositif capteur de distance (16) au niveau de l'origine de coordonnées d'un système de coordonnées cartésiennes avec des directions x, y et z (24, 28, 26), dans lequel le dispositif capteur de distance (16) comprend un capteur (22) pouvant être décalé dans la direction x et la direction z (24, 26) et qui est conçu pour déterminer une distance dans la direction y (28),
b) présenter le véhicule (10) avec un côté conducteur à une distance (29) dans la direction y (28) par rapport au dispositif capteur de distance (16),
c) déterminer la distance (29) dans la direction y (28),
d) déterminer la hauteur (31) d'un capot moteur (36) du véhicule (10) en déterminant la distance dans la direction y (28) pendant un décalage du capteur (22) dans la direction z (26) et en détectant un changement de la distance déterminée,
e) déterminer une position x (39) d'une colonne A (38) du véhicule (10) en déterminant la distance dans la direction y (28) pendant un décalage du capteur (22) dans la direction x négative (40) et en détectant un changement de la distance déterminée en tenant compte de la hauteur déterminée (31) du capot moteur (36),
f) déterminer la position de service (34) en soustrayant une valeur de distance y prédéfinie (42) de la distance (29) déterminée à l'étape c) dans la direction y (28), en additionnant une valeur de distance z prédéfinie (44) à la hauteur (31) du capot moteur (36) déterminée à l'étape d), et en additionnant une valeur de distance x prédéfinie (46) à la position x (39) de la colonne A (38), déterminée à l'étape e),
dans lequel les étapes c) à f) sont effectuées de manière automatisée au moyen du dispositif capteur de distance (16) ;
et dans lequel le capteur (22) peut être décalé dans deux directions orthogonales l'une par rapport à l'autre, et la distance déterminée dans la direction y est orthogonale aux directions x et z.

2. Procédé selon la revendication 1, dans lequel la présentation du véhicule (10) avec un côté conducteur à une distance (29) dans la direction y (28) par rapport au dispositif capteur de distance (16) comprend la présentation du véhicule (10) au niveau d'une ligne d'arrêt (20), d'un équipement d'arrêt et/ou d'une barrière.

3. Procédé selon la revendication 1 ou 2, dans lequel la présentation d'un dispositif capteur de distance (16) comprend la présentation du dispositif capteur de distance (16) sur un côté d'une rue dans une zone devant la ligne (20), l'équipement d'arrêt et/ou la barrière.

4. Procédé selon l'une quelconque des revendications précédentes, dans lequel le procédé comprend en outre l'étape suivante consistant à : g) ajuster la position de service (34) en enregistrant une image de caméra à la position de service déterminée (34), détecter une position du conducteur sur l'image de caméra au moyen d'algorithmes de reconnaissance d'image, et adapter la position de service déterminée (34) sur la base de la position détectée du conducteur.

5. Procédé selon la revendication 1 à 4, dans lequel la détection de la présence et/ou la détection de l'absence du véhicule (10) comprennent la détermination de la distance (29) dans la direction y (28) au moyen du capteur (22) du dispositif capteur de distance (16) et la comparaison de la distance mesurée avec une valeur limite.

6. Procédé selon la revendication 1 à 5, dans lequel la détection de la présence et/ou la détection de l'absence du véhicule (10) comprennent la détermination d'une pression, d'une force et/ou d'un poids au moyen d'un capteur de balance.

7. Procédé selon l'une quelconque des revendications 1 à 6, dans lequel la présentation du terminal de service (14) dans une position initiale (32) comprend la présentation du terminal de service (14) de sorte que le véhicule (10) peut rouler substantiellement directement vers une ligne d'arrêt (20), un équipement d'arrêt et/ou une barrière.

8. Procédé selon l'une quelconque des revendications 1 à 7, dans lequel le numéro d'immatriculation d'un véhicule 10 est reconnu de manière optique, et par l'intermédiaire de l'identifiant de la plaque d'immatriculation du véhicule (10) qui est stockée dans une base de données, une sélection d'un ou de plusieurs produits et/ou de services, effectuée par l'intermédiaire du terminal de service (14) et/ou par internet, est associée automatiquement à ce véhicule pour un traitement ultérieur.

9. Procédé selon l'une quelconque des revendications 1 à 8, dans lequel le dispositif (14) commande un contrôle d'admission pour le véhicule (10) par l'intermédiaire de l'identifiant de la plaque d'immatriculation d'un véhicule (10).

10. Dispositif (12) permettant d'exécuter le procédé selon l'une quelconque des revendications 1 à 7, comprenant un dispositif capteur de distance (16), une unité de commande (18) et un terminal de service mobile (14), dans lequel le dispositif capteur de distance (16) comprend un capteur (22) pouvant être décalé dans deux directions (24, 26) orthogonales l'une par rapport à l'autre, et dans lequel le capteur (22) est configuré pour déterminer une distance dans une direction (28) qui est orthogonale aux deux directions (24, 26) dans lesquelles le capteur (22) peut être décalé, dans lequel le terminal de service mobile (14) peut être déplacé, pivoté et/ou décalé de manière automatisée d'une position initiale (32) à une position de service (34), et dans lequel l'unité de commande (18) est aménagée pour exécuter le procédé.

11. Dispositif (12) selon la revendication 10, dans lequel le dispositif (12) est couplé à un système de reconnaissance optique des numéros d'immatriculation.

12. Dispositif (12) selon la revendication 10 ou 11, dans lequel le dispositif (12) est en communication avec une base de données.

13. Dispositif (12) selon l'une quelconque des revendications 10 à 12, dans lequel le dispositif (12) est relié à un dispositif d'admission automatique.
